# EUROPEAN PATENT APPLICATION

(11) **EP 1 874 041 A1**
(43) Date of publication of application: **02.01.2008**
(21) Application number: 06731700.8
(22) Date of filing: 12.04.2006
(51) Int. Cl.: H04N 5/225, B60R 1/00, B62D 41/00, H04N 5/915, B60R 21/00

(54) **IMAGING DEVICE AND DRIVE RECORDER SYSTEM**

(30) Priority: 15.04.2005 JP 2005118655
(71) Applicant: NIKON CORPORATION, Tokyo 100-8331 (JP)
(72) Inventor: FUJINAWA, Nobuhir c/o NIKON CORPORATION, Intellec, , Chiyoda-ku, Tokyo; 1008331 (JP); NOZAKI, Hirotake c/o NIKON CORPORATION,, 3-Chome, Chiyoda-ku, Tokyo; 1008331 (JP); MITSUHASHI, Setsu c/o NIKON CORPORATION,, 3-Chome, Chiyoda-ku, Tokyo; 1008331 (JP)
(74) Representative: Whitlock, Holly Elizabeth Ann
(86) International application number: PCT/JP2006/307764
(87) International publication number: WO 2006/112333

(57) **Abstract**

An imaging apparatus mounted on a vehicle and imaging a vicinity of the vehicle, includes a photographic lens, an image pickup device, an image processing section, an accident detection sensor, a controlling section, and a recording section. The image pickup device generates an image signal by performing photoelectric conversion of an object image based on a light flux from the photographic lens. The image processing section generates moving image data during vehicle driving based on an image signal. The accident detection sensor detects an accident occurrence based on a shock to the vehicle. The controlling section makes the image processing section generate accident image data representing an accident situation based on an output of the accident detection sensor in a manner different from that in a normal situation. Then, the accident image data is recorded in the recording section.

## Description

### TECHNICAL FIELD

The present invention relates to an imaging apparatus and a drive recorder system mounted on a vehicle for imaging and recording a vicinity of the vehicle at an accident.

### BACKGROUND ART

Conventionally, there are proposed drive recorders which mount cameras capable of photographing moving images on vehicles and record pictures at accidents (refer to Patent Document 1 and Non-patent Document 1). These drive recorders have a configuration in which moving image data is generated by imaging a vicinity of the vehicle during driving and moving image data in a recording section is overwritten and updated sequentially in a normal situation. Then, when an accident has occurred, overwriting of moving image data in the recording section is forbidden and moving image data for a certain period of time before and after the accident is held in the recording section. Here, from a requirement that moving image data for a long time is to be recorded with a small recording capacity in a drive recorder, a resolution of moving image data is generalty set to be relatively low in a drive recorder.

However, while an outline of a process until an accident occurrence can be grasped with aforementioned moving image data, there are many cases where an image resolution is not high enough to analyze a picture at an accident in detail.
Patent Document 1: Japanese Unexamined Patent Application Publication No. Hei-8-235491
Non-patent Document 1: Home page Traffic Accident Identification Laboratory in Japan, "Drive Recorder 'Witness' (online)", (searched on Jan. 11, 2005), <URL: http://witness-jp. Com>

### DISCLOSURE OF THE INVENTION

### PROBLEMS TO BE SOLVED BY THE INVENTION

The present invention is achieved for removing a shortcoming of the conventional technology, and an object thereof is to provide an imaging apparatus and a drive recorder system capable of obtaining accident image data suitable for analyzing a situation of an accident in detail.

### MEANS FOR SOL WNG THE PROBLEMS

A first invention is an imaging apparatus mounted on a vehicle for imaging a vicinity of the vehicle, characterized by including a photographic lens, an image pickup device, an image processing section, an accident detection sensor, a controlling section, and a recording section. The image pickup device generates an image signal by performing photoelectric conversion of an object image based on a light flux from the photographic lens. The image processing section generates moving image data during vehicle driving based on the image signal. The accident detection sensor detects an accident occurrence based on a shock to the vehicle. The controlling section makes the image processing section generate accident image data representing a situation of the accident according to an output of the accident detection sensor in a manner different from that in a normal situation. Then the accident image data is recorded in the recording section.

A second invention is the imaging apparatus according to the first invention, in which the image processing section generates one or more frames of still image data, an information amount per frame of which is larger than that of moving image data in a normal situation, at a predetermined timing based on an output of the accident detection sensor, and the recording section records moving image data and the still image data at an accident occurrence as accident image data.
A third invention is the imaging apparatus according to the second invention, and characterized in that the still image data is different from a frame of moving image data in a normal situation in at least one of settings for a resolution, a gradation number and an aspect ratio.

A fourth invention is the imaging apparatus according to the second or third invention, in which the image processing section generates multiple frames of the still image data during an photographing period of moving image data that constitutes the accident image data.
A fifth invention is the imaging apparatus according to the fourth invention, in which the controlling section generates additional data representing a corresponding relationship between moving image data in the accident image data and frames of the still image data, and records the additional data in association with the accident image data in the recording section.

A sixth invention is the imaging apparatus according to any one of the second to fifth inventions, wherein the controlling section carries out a bracketing photography by changing a photographic condition for each frame of the still image data.
A seventh invention is the imaging apparatus according to any one of the first to sixth inventions, wherein the image processing section carries out at least one setting change out of increase of a resolution, increase of a gradation number, and change of an aspect ratio in the moving image data, based on the output of the accident detection sensor, and generates moving image data constituting accident image data.

A eighth invention is the imaging apparatus according to any one of the first to seventh inventions, further including a brakeage detection sensor for detecting sudden braking of a vehicle, in which the controlling section instructs to start generation of an accident image data on detecting the sudden braking, and makes the recording section hold accident image data when having detected an accident occurrence within a predetermined period of time from the detection of the sudden braking.
A drive recorder system according to a ninth invention includes the imaging apparatus according to any one of the first to eighth inventions, a driving state detecting section for detecting a driving state of the vehicle, and a driving state recording section for recording a driving state data representing the driving state.

### ADVANTAGE OF THE INVENTION

According to the present invention, the image processing section generates accident image data representing an accident situation at an accident occurrence in a manner different from that in a normal situation, and a detailed situation at the accident can be analyzed using this accident image data.

### BRIEF DESCRIPTION OF THE DRAWINGS

Fig. 1 is a block diagram showing a configuration of a drive recorder camera according to a first embodiment;
Fig. 2 is an appearance view of the drive recorder camera;
Fig. 3 is a diagram showing an attached state of the drive recorder camera;
Fig. 4 is an explanatory diagram of an AE calculation in the drive recorder camera;
Fig. 5 is a flow chart showing an operation of the drive recorder camera according to the first embodiment;
Fig. 6 is an explanatory diagram showing a photographing area for a moving image in the drive recorder camera;
Fig. 7 is a timing chart of a still image photographing in the first embodiment;
Fig. 8 is a timing chart of a still image photographing in a second embodiment;
Fig. 9 is a flow chart showing an operation of a drive recorder camera according to a third embodiment;
Fig. 10 is a block diagram showing a configuration of a drive recorder camera according to a fourth embodiment; and
Fig. 11 is a block diagram showing an example of a drive recorder system.

### BEST MODE FOR CARRYING OUT THE INVENTION

### (Description of a first embodiment)

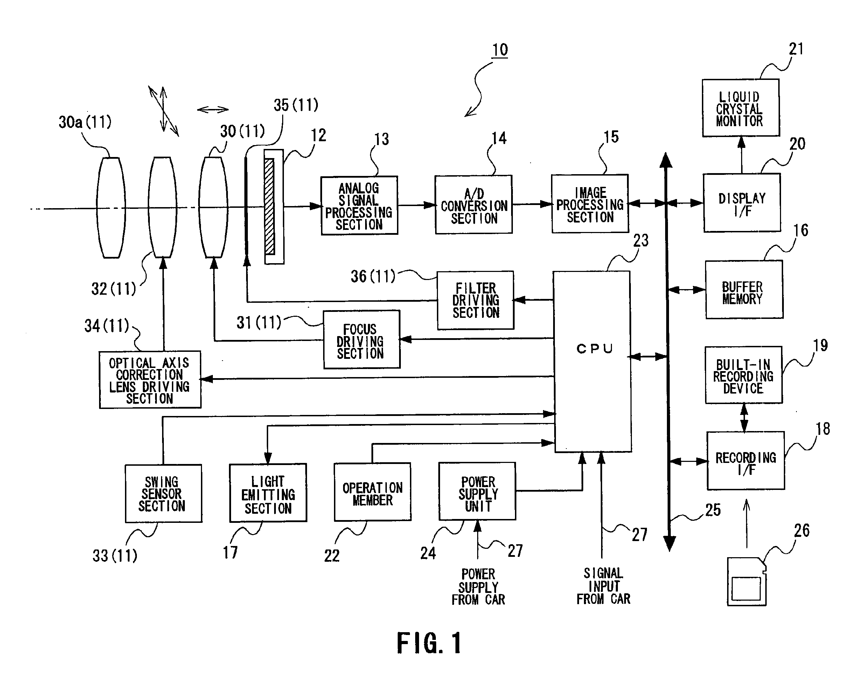

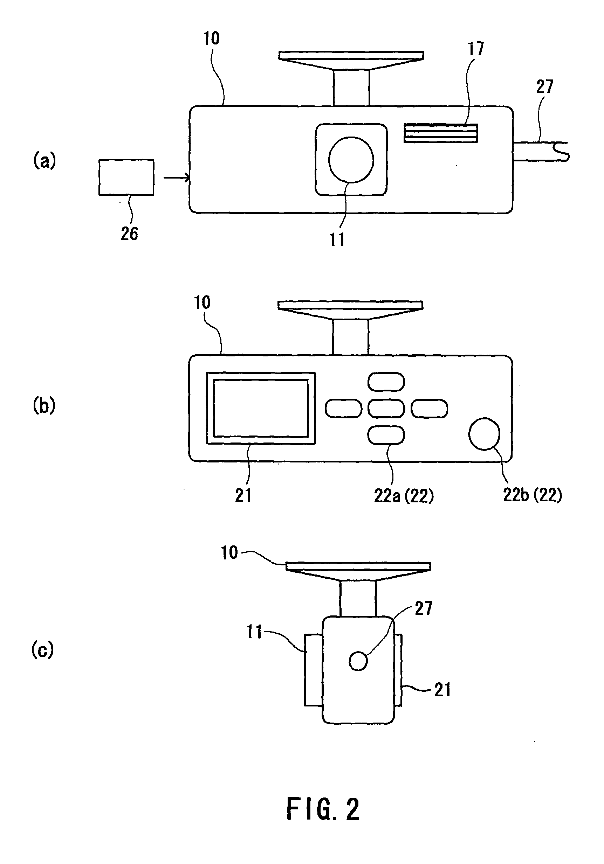

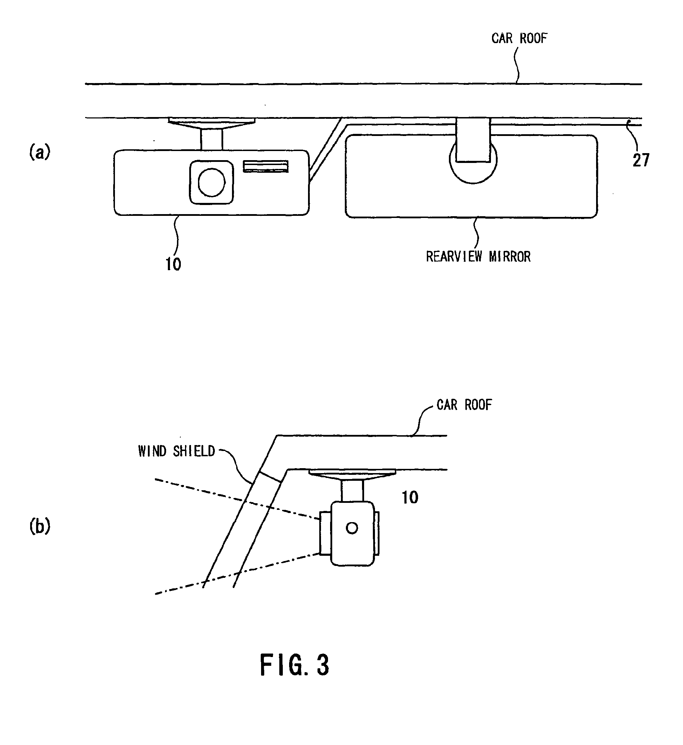

Fig. 1 is a block diagram showing a configuration of a drive recorder camera according to a first embodiment. Fig. 2 is an appearance view of the drive recorder camera and Fig. 3 is a diagram showing an attached state of the drive recorder camera.
A drive recorder camera 10 according to the first embodiment is attached to a position in a car, from which an area including a viewing field ahead of a driver's seat can be photographed, (for example, near a rearview mirror in the car). Then, the drive recorder camera 10 can photograph an image around the car during car driving (refer to Fig. 3). As shown in Fig. 2A, a photographic optical system 11 and a light emitting section 17 are disposed on the front side of a housing of the drive recorder camera 10. Also, as shown in Fig. 2B, a liquid crystal monitor 21, and an operation switch 22a and a release button 22b forming an operation member 22 are disposed on the rear side of the housing of the drive recorder camera 10.

Further, as shown in Fig. 2C, a connector is provided for detachably connecting with a recording medium 26 (such as publicly known semiconductor memory and the like) on a side of the housing of the drive recorder camera 10. Still further, the drive recorder camera 10 is connected with a cable 27 for receiving various kinds of signal inputs and an electric power supply from the car.
As shown in Fig. 1, the drive recorder camera 10 includes a photographic optical system 11, an image pickup device 12, an analog signal processing section 13, an A/D conversion section 14, an image processing section 15, a buffer memory 16, a light emitting section 17, a recording I/F 18, a built-in recording device 19, a display I/F 20 and liquid crystal monitor 21, an operation member 22, a CPU 23, a power supply unit 24, and a data bus 25. Here, the image processing section 15, the buffer memory 16, the recoding I/F 18, the display I/F 20, and the CPU 23 are connected with each other via the data bus 25.

The photographic optical system 11 includes a focusing lens 30 for adjusting a focal point, a front lens 30a, a focus driving section 31, an optical axis correction lens 32, a swing sensor section 33, an optical-axis-correction-lens driving section 34, an infra-red cut filter 35, and a filter driving section 36.
The focus driving section 31 changes a position of the focusing lens 30 in the direction of an optical axis. The optical axis correction lens 32 is configured to be able to swing in a direction perpendicular to the optical axis. The swing sensor section 33 includes a vertical angular velocity sensor for sensing a vertical swing of the camera and a horizontal angular velocity sensor for sensing a horizontal swing of the camera. This swing sensor section 33 monitors a swing of the camera during car driving, and outputs camera swing data to the CPU 23. This camera swing data can be used for determining generation of accident image data as to be described hereinafter, other than for computing a shift amount of the optical axis correction lens 32. Here, when the camera swing data is used for determining generation of an accident image data, the swing sensor section 33 may be configured with sensors for an angular velocity around each of three axes perpendicular to each other and sensors for acceleration along each of three axes perpendicular to each other.

The optical-axis-correction-lens driving section 34 is constituted by a first driving section for swinging the optical axis correction lens 32 in a vertical swing direction (x direction) and a second driving section for swinging the optical axis correction lens in a horizontal swing direction (y direction). This optical-axis-correction-lens driving section 34 performs blur compensation by swinging the optical axis correction lens 32 according to an instruction of the CPU 23. The infra-red cut filter 35 cuts off an infra-red component from a light flux passing through the lenses. This infra-red cut filter 35 is configured to be able to retreat from a photographic light path by the filter driving section 36.

The image pickup device 12 is disposed on an image space side of the photographic optical system 11. On a light receiving surface of the image pickup device 12 (surface facing the photographic optical system 11), there are arranged light receiving elements in a matrix for generating an analog image signal by photoelectrically converting an object image. An output of this image pickup device 12 is connected to the analog signal processing section 13. Here, the image pickup device 12 may be either a sequential charge transfer type (CCD or the like) or an X-Y addressing type (CMOS or the like).

The analog signal processing section 13 includes a CDS circuit for performing a correlated double sampling, a gain circuit for amplifying an output of the analog image signal, a clamp circuit for clamping an input signal waveform to a certain voltage level, etc. The A/D conversion section 14 converts the analog image signal output from the analog signal processing section 13 into a digital image signal.
The image processing section 15 provides the digital image signal with an image processing (defective pixel compensation, gamma correction, interpolation, color conversion, edge enhancement, etc.) to generate image data (moving image data or still image data). Also, the image processing section 15 performs an image data compression processing and the like. The buffer memory 16 is configured with an SDRAM or the like. This buffer memory 16 stores temporarily an image data frame for the previous or the following step of an image processing in the image processing section 15.

The light emitting section 17 is formed by a xenon light bulb, a main capacitor for storing light emission energy, a light emission control circuit for controlling a light emission timing of the xenon light bulb according to an instruction of the CPU 23, etc. This light emitting section 17 emits light as needed in photographing a still image to illuminate an object by a flashing light.
The recording I/F 18 is connected with a connector of the recording medium 26 and the built-in recording device 19. Then, the recording I/F 18 controls reading and writing data from and into the recording medium 26 and the built-in recording device 19. Here, the built-in recording device 19 is formed by, for example, a recording device using such as a magnetic disk like a hard-disk, an optical disk, and a magneto-optical disk, a semiconductor memory, or the like.

The display I/F 20 is connected with the liquid crystal monitor 21. On the liquid crystal monitor 21, there are displayed a reproduced image of image data output from the recording I/F 18, a setting screen for changing various settings of the camera, etc. The operation switch 22a in the operation member 22 is used for such as an input operation at the setting screen. The release button 22b in the operation member 22 is used when a user instructs the CPU 23 to photograph at an accident occurrence and the like.

The CPU 23 controls each part of the drive recorder camera 10 according to a sequence program stored in a ROM (not shown in the drawing). Then, during car driving, the CPU 23 makes the image pickup device 12 photograph a viewing field ahead of a driver's seat and makes the image processing section 15 generate moving image data.
Also, the CPU 23 is connected with a switch group provided at each part of the car (not shown in the drawing) via a cable 27, and can detect an accident occurrence of the car or a state of a brake based on input signals from the switch group. Then, the CPU 23 makes the image processing section 15 generate still image data other than moving image data when having detected an accident.

The CPU 23 carries out other control functions described in the following (1) to (4). (1) The CPU 23 carries out an AE calculation or the like based on an image signal from the image pickup device 12. Here, in an AE calculation of the first embodiment, the CPU 23 preferably carries out the AE calculation based on an image signal from a lower side of a screen and does not use an image signal from an upper side of the screen for the AE calculation. The reason is as follows.

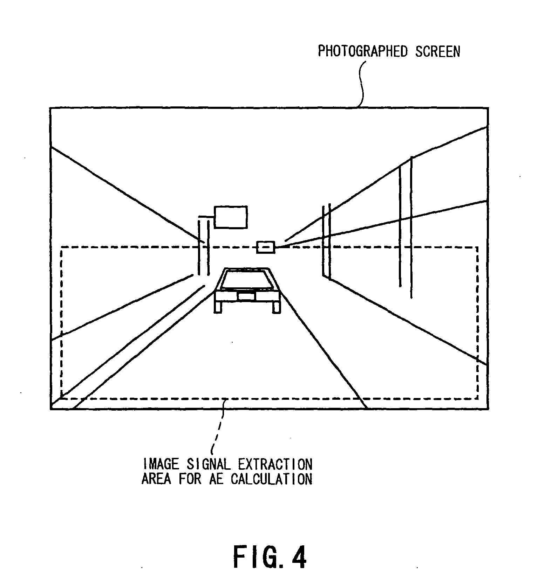

As shown in Fig. 4, generally, an photographed image by the drive recorder camera 10 frequently has an composition in which an important object such as a road, a car, a pedestrian, etc. is located in a area of a lower half from a center of a photographed screen and an upper half of the photographed screen is occupied by the sky. In this case, when an AE calculation is carried out using an image signal of a whole photographed screen, there is a case where an exposure of a whole image is adjusted to an under side by an influence of a bright sky. As a result, the important object in the lower half area of the image sinks in the dark. Particularly in photographing against the sun, the tendency becomes further outstanding. Therefore, as shown in Fig. 4, the CPU 23 carries out an AE calculation based on an image signal from a lower side of an image, resulting in that an exposure of the lower side of the screen becomes appropriate, though an exposure of the sky in the upper side of the screen goes slightly on an over side. Here, it becomes possible to photograph an image with which an accident situation is easily grasped.

(2) The CPU 23 calculates a contrast value of an object from an image signal and makes the focus driving section 31 perform an AF control by adjusting a position of the focus lens 30 in the direction of the optical axis in a manner of mountain climbing.
(3) The CPU 23 calculates correction amounts of the optical axis correction lens 32 in the x and y directions based on camera swing data, and carries out the blur compensation by outputting these correction amounts to the optical-axis-correction-lens driving section 34.

(4) The CPU 23 can change a position of the infra-red cut filter 35 by controlling the filter driving section 36 according to a time of a built-in clock (not shown in the drawing), a brightness of a photographed image, etc. Specifically, the CPU 23 disposes the infra-red cut filter 35 on the photographic light path for removing an influence of an infra-red component of the sun light in the daytime. On the other hand, at night or in a tunnel, the CPU 23 makes the infra-red cut filter 35 retreat from the photographic light path and improves an identification capability of a person and the like in an image by utilizing the infra-red component.

The power supply unit 24 is connected with a car battery via the cable 27. Within the power supply unit 24, there is provided a rechargeable battery charged with electric power supplied from the car, and electric power is supplied to each part of the camera from the rechargeable battery (here, electric power lines except for that to the CPU 23 are omitted in the drawing). Therefore, the drive recorder camera 10 can operate continuously with electric power form the rechargeable battery in the power supply unit 24, even when the electric power supply from the car is cut off at an accident.

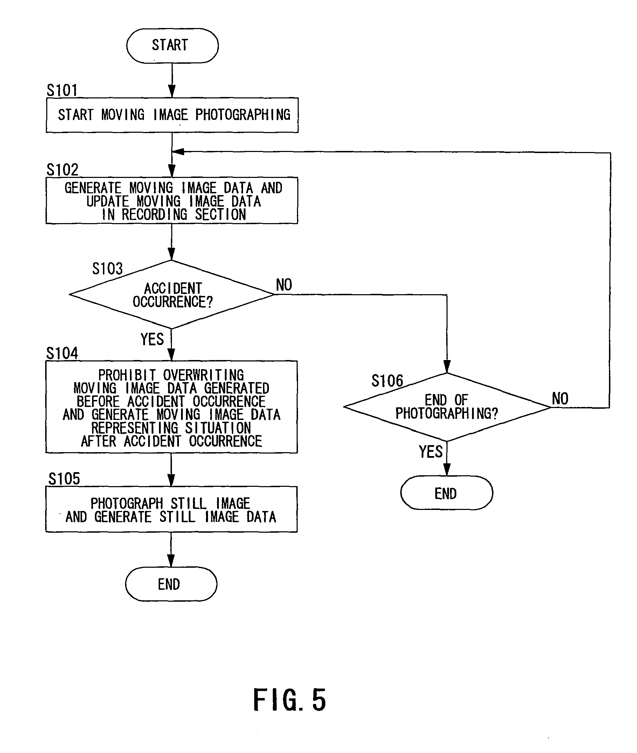

Hereinbelow, an operation of the drive recorder camera according to the first embodiment will be described in reference to the flow chart of Fig. 5.
Step S101: The CPU 23 starts photographing a moving image by detecting a car driving state (for example, engine start, wheel rotation, or the like), or by an input of photographing start by a user.

Step S102: The CPU 23 drives the image pickup device 12 to photograph an image of a viewing field ahead of a driver's seat. Then, the image processing section 15 generates moving image data at a predetermined frame rate (e. g., 15 fps or 30 fps) based on the image signal from the image pickup device 12. Then, the CPU 23 records the moving image data in the recording medium 26 or the built-in recording device 19. Here, moving image data recorded in S102 is overwritten in order from oldest data after a certain time has elapsed, and moving image data is held for a certain time period in the drive recorder camera 10, while being updated sequentially.

Here, the moving image data is generated for the purpose of grasping a rough movement or a relative change in a whole image. Therefore, the CPU 23 generates moving image data by using at least any one of the following settings (1) to (3).
(1) The CPU 23 sets a resolution of moving image data lower than a resolution in a case where all the pixels of the image pickup device 12 are read out. For example, in a case where the number of pixels of an effective pixel area in the image pickup device 12 is 1,600 x 1,200, the CPU 23 sets the resolution of moving image data to be 640 x 480 pixels or 320 x 240 pixels. Thereby, a higher speed signal reading from the image pickup device 12 and a less computational load on the image processing section 15 can be realized by the pixel skipping readout. Also, since a data amount of moving image data becomes smaller, it becomes possible to make longer a recording time of the moving image data.

(2) The CPU 23 sets a gradation number of moving image data to be smaller than that of still image data. For example, in a case where the drive recorder camera 10 can photograph a still image with a color of eight bits for each R, G, and B, the CPU 23 sets a gradation number of moving image data to be five bits for each R, G, and B. In the above setting example, a data amount of moving image data is reduced to 15 bits (about two bytes) per pixel, while a data amount of still image data is 24 bits (tree bytes) per pixel. Therefore, the above setting suppresses a computation load on the image processing section 15 and a data amount of moving image data. Here, a monochrome photographing for moving image data further can reduce the data amount.

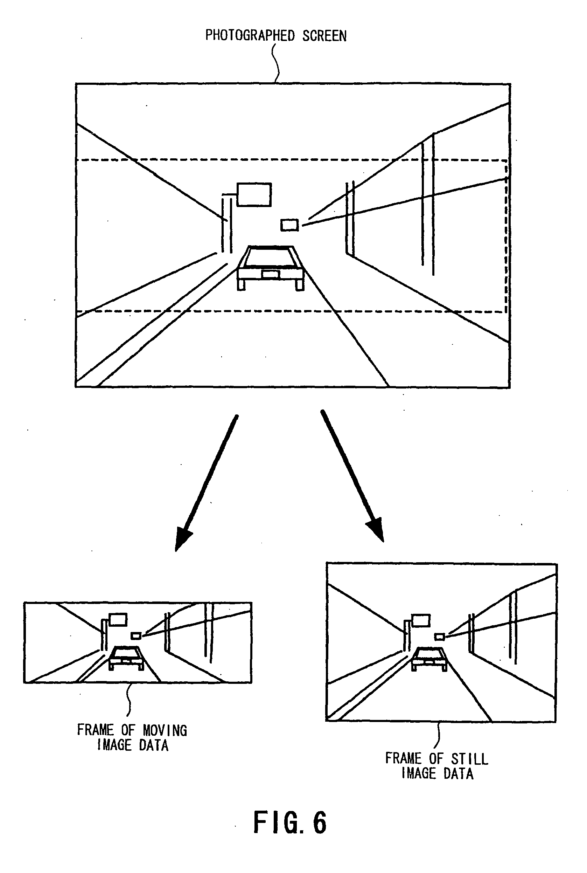

(3) The CPU 23 changes an aspect ratio between moving image data and still image data and sets an image size of moving image data to be smaller than that of still image data. For example, the CPU 23 may read out partially a image signal of a central part of the image pickup device 12 in the horizontal direction, and photographs a moving image in a landscape image, an upper and lower part of which are cut off (refer to Fig. 6). Even with moving image data by the above setting, a situation around the car before and after an accident can be grasped sufficiently and any problems will not occur. On the other hand, a faster signal reading from the image pickup device 12 by the partial readout and suppression of a computational load on the image processing section 15 are realized. Also, since a data amount of moving image data becomes smaller, it becomes possible to make longer a recording time of moving image data.

Step S103: The CPU 23 determines whether an accident has occurred to the car, based on input signals from the switch group of the car or a signal from the swing sensor 33.
More specifically, the CPU 23 determines that an accident has occurred in cases: (1) the CPU 23 receives an explosion signal of an air bag of the car by a crash, (2) the CPU 23 receives an operation signal of an electric motor rewinding a seat belt at an crash, (3) the CPU 23 receives a crash detection signal from a crash detection sensor provided on such as a bumper or a bonnet hood of the car, and (4) a swing larger than a threshold value is detected in the swing sensor section 33.

Then, if an accident has occurred (YES), the process goes to S104. On the other hand, if an accident occurrence is not detected (NO), the process goes to S106.
Step S104: Here, the CPU 23 prohibits overwriting of moving image data recorded in the recording medium 26 or the built-in recording device 19 at the same time of an accident occurrence, and holds moving image data representing a situation before and after the accident. Here, the CPU 12 keeps generating moving image data continuously even until a predetermined time after the accident occurrence, and records moving image data representing a situation after the accident occurrence in the recording medium 26 or the built-in recording device 19.

Step S105: The CPU 23 photographs a still image at a predetermined timing after the accident occurrence and generates still image data. Then, the CPU 23 records the still image data in the recording medium 26 or the built-in recording device 19, and ends the photographing operation.

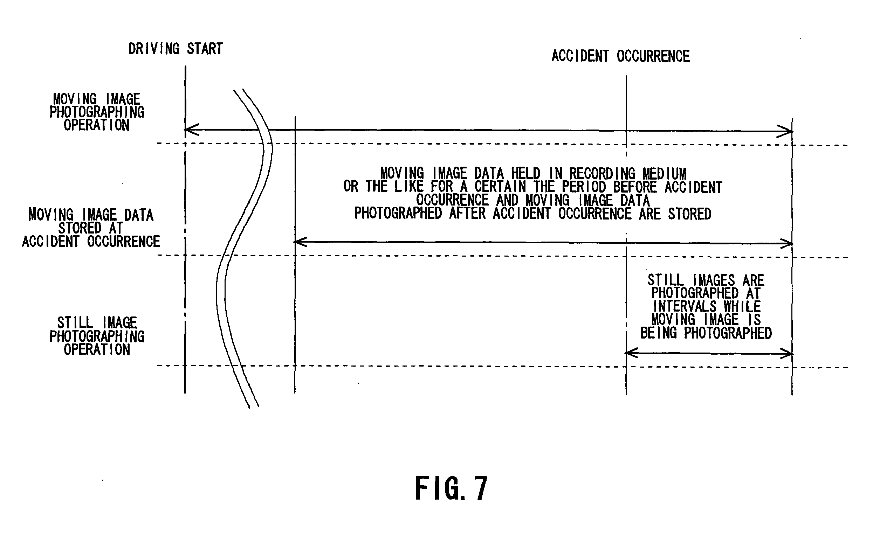

Fig. 7 is a timing chart of photographing a still image in the first embodiment. In the first embodiment, the CPU 23 carries out photographing a still image in multiple times at intervals, while photographing a moving image just after an accident occurrence. In photographing a still image, a bracketing photography may be carried out by changing exposure conditions for each frame (shutter speed (second), ISO sensitivity and the like). Here, the CPU 23 stops generating frames of moving image data temporarily during photographing still images and interpolates the moving image data during photographing the still images with frames just before starting the still image photographing. Thereby, it is possible to generate moving image data, from which a situation at the accident occurrence can be sufficiently grasped, though a motion of an object is slightly awkward during the still image photographing.

Here, the above described still image data is generated for the purpose of analyzing a picture at an accident in detail, and a clear image with a higher resolution and a higher gradation level and an image photographing of a wider area than a frame of a moving image are required. Therefore, the CPU 23 carries out photographing by changing at least one of settings for a resolution, a gradation number and an aspect ratio of the above mentioned still image data from those of moving image data, and by setting an information amount per frame of the still image data to be larger than that of moving image data. For example, in an example of S102, the CPU 23 reads out an image signal of all the pixels from the image pickup device 12 in the still image photographing, and generates color still image data of 1,600 x 1,200 pixels with eight bits for each R, G, and B.

Also, still image data, in which a photographed object is blurred, is treated as an image of failed photography which can not be used for an accident analysis. Therefore, the CPU 23 preferably carries out the blur compensation by swinging the optical axis correction lens 32 in the still image photographing. Further, the CPU 23 preferably suppresses a blur occurrence by limiting an exposure time not more than a predetermined time (e. g., 1/60 second) in the still image photographing. Here, in a case where exposure becomes insufficient by limiting the exposure time, the CPU 23 preferably compensates image sensitivity by adjusting a gain in the analog signal processing section 13 or the image processing section 15. In this case, it is possible to obtain a relatively fine still image, while an S/N ratio is slightly degraded.

Further, in the still image photographing, the CPU 23 generates additional data representing which frame of moving image data each still image data corresponds to. This additional data is recorded in association with the still image data. For example, in a case where the still image data complies with the Exif (Exchangeable image file format for digital still cameras) Standard, the above mentioned additional data may be recorded on the MakerNote tag of the still image data.

Step S106: The CPU 23 determines whether there is an instruction to end photographing by an input from a user or the like. If there is an instruction to end photographing (YES), the CPU 23 ends photographing. On the other hand, if there is not an instruction to end photographing, the process returns to S102 and the CPU repeats the above described steps. The explanation about the operation of the first embodiment finishes with the above description.
At an accident occurrence, the drive recorder camera 10 according to the first embodiment records moving image data before and after an accident occurrence and also photographs multiple frames of the still image data which are photographed more clearly in detail than those of moving image data. Therefore, it is possible to grasp generally a process until an accident occurrence by the moving image data and to analyze a detailed situation at the accident using the still image data.

Also, since each frame of the still image data is associated with a frame of the moving image data by the additional data, analysis of a situation of the accident using both of the moving image data and the still image data can be done more easily. Further, when still image data is generated with a bracketing photography, there will be more possibility to obtain still image data for a clear image photographed with an appropriate exposure.
Here, in the first embodiment, a user can photograph a still image with the release button 22b. In this case, the CPU 23 generates still image data by carrying out an AE calculation based on an image signal of a whole screen as a usual electronic camera does. Thereby, a user can photograph an additional still image at an accident as needed and a situation of the accident can be analyzed more easily. Also, it is possible to use the drive recorder camera 10 for photographing a landscape during driving, and convenience and entertaining features as a product are further improved.

### (Description of a second embodiment)

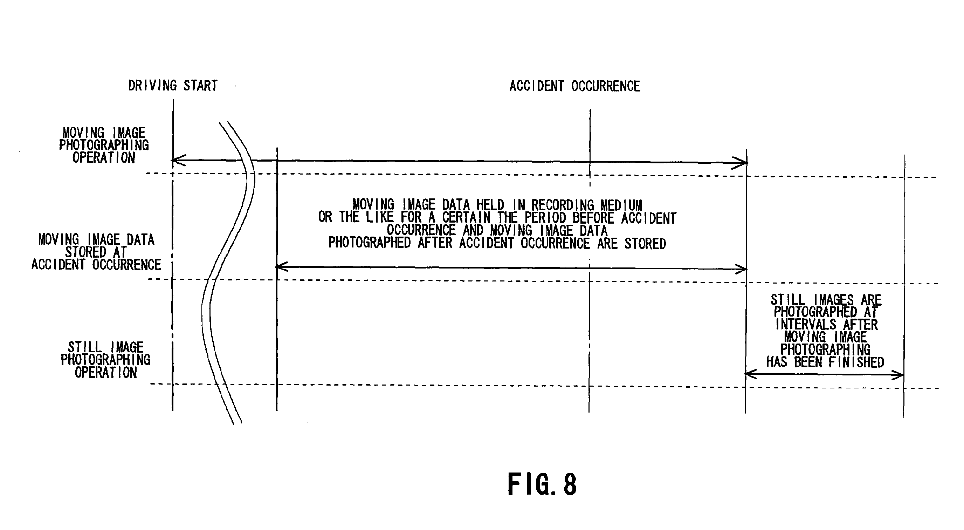

Fig. 8 is a timing chart of photographing a still image in a second embodiment. Here, in the embodiment described below, the same constituents as in the first embodiment are denoted by the same symbols and duplicated explanations will be omitted.
The second embodiment is a variation of the first embodiment, and a CPU 23 carries out photographing a moving image for a predetermined time period just after an accident occurrence, and carries out photographing a still image in multiple times after having finished photographing a moving image.

In this second embodiment, in addition to almost the same advantages as in the first embodiment, it is possible to obtain moving image data in which motions of an object are more natural, since photographing of a moving image is not interrupted by photographing of a still image.

### (Description of a third embodiment)

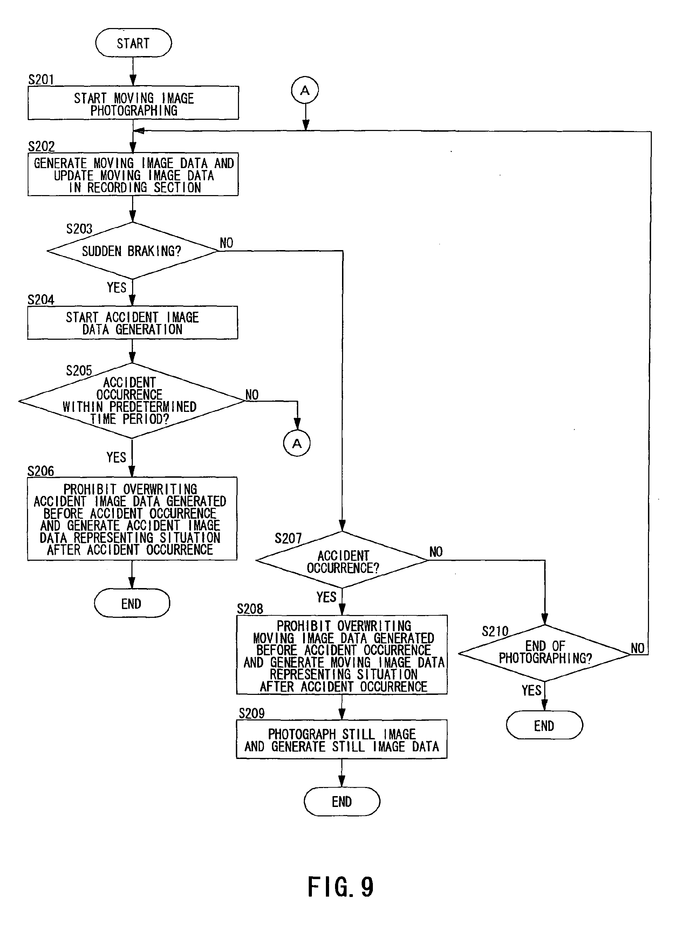

Fig. 9 is a flow chart showing operation of a drive recorder camera according to a third embodiment. This third embodiment has a configuration in which accident image data starts to be generated in advance at a sudden braking. Here, S201 and S202 in Fig. 9 correspond to S101 and S102 in Fig. 5, S207 to S 210 in Fig. 9 correspond to S103 to S106, respectively, and explanation thereof will be omitted.

Step S203: A CPU 23 determines whether a car has braked suddenly or not. More specifically, the CPU 23 determines that a car has braked suddenly (1) in a case where a braking signal is input into the CPU 23 from the car and a swing value larger than a threshold value is detected at the same time from a swing sensor section 33, (2) in a case where an output pattern from the swing sensor section 33 corresponds to a pattern which was experimentally obtained for a sudden braking, or the like. Then, if there is a sudden braking (YES), the process goes to S204. On the other hand, if a sudden braking is not detected (NO), the process goes to S207.

Step S204: When the car brakes suddenly, there is a high probability that an accident will occur just after that, and the CPU 23 starts to generate accident image data. For example, the CPU 23 carries out photographing of a still image in multiple times at intervals after a sudden braking, while photographing a moving image. Here, the CPU 23 may change a setting of a resolution, a gradation number and an aspect ratio of moving image data, and photograph a frame of moving image data in an increased data amount per frame.

Step S205: The CPU 23 determines whether an accident has occurred to the car within a predetermined time period from the sudden braking. If an accident has occurred within a predetermined time period (YES), the process goes to S206. On the other hand, if an accident has not occurred, the process returns to S202, and the CPU 23 returns to perform a usual operation of photographing a moving image. Here, in this case, accident image data generated in S204 to S205 is erased sequentially by such as overwriting of moving image data generated in S202.

Step S206: Here, the CPU 23 prohibits overwriting the accident image data which started to be generated at the time of S204, and holds the accident image data representing a situation before the accident occurrence. Then, the CPU 23 continues to photograph frames of moving image data and still image data after the accident occurrence, and records the accident image data representing a situation after the accident occurrence in the recording medium 26 or the built-in recording device 19. Then, the CPU 23 ends photographing operation.

In this third embodiment, since generation of an accident image data starts from the time of a sudden braking, more image information before an accident occurrence can be collected than in a case of the first embodiment and it becomes easier to analyze an accident situation. Here, even in a case where there is not a sudden braking just before an accident such as in a case of a sudden jumping-in, an accident image data is generated in a process as in the first embodiment, and, also in this case, it is possible to obtain an effect similar to that in the first embodiment.

### (Description of a fourth embodiment)

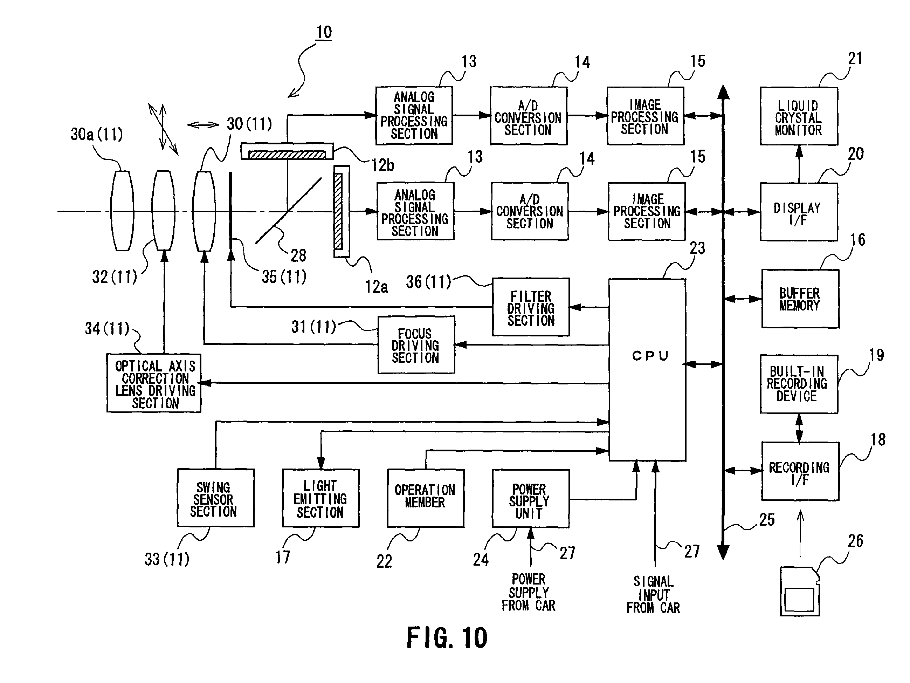

Fig. 10 is a block diagram showing a configuration of a drive recorder camera according to a fourth embodiment. The fourth embodiment has two sets of photographing systems which include an image pickup device 12, an analog signal processing section 13, an A/D conversion section 14, and an image processing section 15, and generation of still image data and generation of moving image data are carried out in the different photographing systems in parallel.

Also, a half mirror 28 is disposed with a tilt in a photographic optical system 11 on an image space side thereof. Then, one part of a light flux from an object passes through the half-mirror 28 and is guided to one image pickup device 12a disposed behind the half-mirror 28. Also, the other part of the light flux from the object is reflected by the half-mirror 28 and guided to the other image pickup device 12b disposed above the half-mirror.

In this fourth embodiment, since moving image photographing and still image photographing are carried out in the different photographing systems, respectively, moving image data with a natural motion of an object can be obtained, even when still image photographing is done during photographing a moving image. Also, since the two image pickup devices 12 photograph an image from the same photographic optical system, parallax is not caused between moving image data and still image data. Further, even when one photographing system has a trouble, the other photographing system can generate an accident image data, and it is possible to obtain an accident image data more assuredly.

### (Supplement to the embodiments)

Hereinabove, the present invention has been described according to the foregoing embodiments, but the technological scope of the present invention is not limited to those of the foregoing embodiments and may include the following configuration, for example.
(1) In the foregoing embodiments, a drive recorder system may be configured such that the CPU 23 may record driving information of a car obtained via a cable in association with accident image data. For example, the CPU 23 obtains various kinds of driving information (car speed, acceleration, braking pressure, a steering wheel angle, positional information from the GPS, etc.) from a car side, and holds the information for a certain time period in a recording medium of a drive recorder camera. Then, the CPU 23 generates accident recording data at an accident occurrence associating the driving information before and after the accident occurrence with the accident image data. Thereby, it becomes possible to analyze an accident situation of a car in more detail.

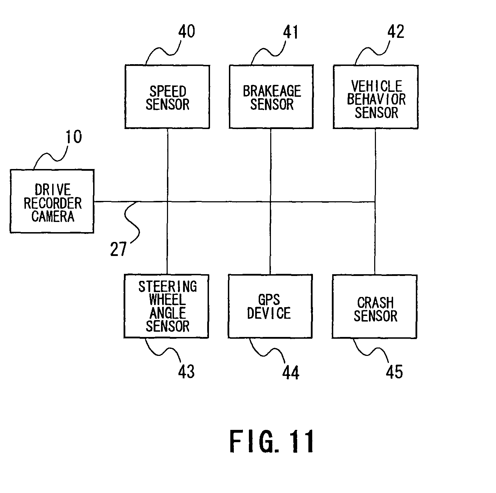

Here, Fig. 11 is a block diagram showing an example of a drive recorder system. A drive recorder camera 10 is connected with each sensor on the vehicle side via a cable 27. The sensors on the vehicle side include a speed sensor 40, brakeage sensor 41, a vehicle behavior sensor 42, a steering wheel angle sensor 43, a GPS device 44, and a crash sensor 45. The speed sensor 40 outputs car speed and acceleration to the drive recorder camera 10. The brakeage sensor 41 outputs data indicating a state of a braking to the drive recorder camera 10. This brakeage sensor 41 may detect an operating state of an ABS device of the vehicle or may detect a pressing force to a brake pedal via a brake link mechanism or the like, for example. The vehicle behavior sensor 42 is formed with a gyro sensor and outputs dynamic behavior data of rolling, pitching and yawing of the vehicle to the drive recorder camera 10. The steering wheel angle sensor 43 outputs a rotating state of a steering wheel to the drive recorder camera 10. The GPS device 44 outputs a present vehicle position based on radio waves form the GPS satellites to the drive recorder camera 10. The crash sensor 45 notifies the drive recorder camera 10 of an accident occurrence. Here, the crash sensor 45 may, for example, detect a shock to a bumper, a bonnet hood, etc. of the vehicle or detect air-bag explosion or operation of an electric motor rewinding a seat belt.

(2) In the present invention, some of the constituents may be omitted from the drive recorder camera 10 according to the foregoing embodiments. For example, by a setting of the photographic optical system 11 in a pan focus mode, the focus lens 30 and the focus driving section 31 may be omitted. Also, the driving mechanism (36) of the infra-red cut filter 35 and the blur compensation mechanism with the optical axis correction lens 32 may be omitted. Here, when the blur compensation mechanism is omitted, it is preferable to provide another swing sensor section 33 for the drive recorder camera 10 to detect a swing caused by a car crash.

(3) The blur compensation of the drive recorder camera 10 is not limited to a mechanical compensation detecting a swing of the optical axis correction lens and may have a configuration using an electronic blur compensation which cancels a blur by shifting a cut-out area of image data according to a swing of the image.
(4) In the fourth embodiment, each photographic system of the moving image photographing and the still image photographing may not share a photographic optical system and different photographic optical systems may be provided for each photographic system, respectively.

(5) In the embodiment, the drive recorder camera may successively photograph a still image with a high resolution during driving.
For example, the CPU 23 starts photographing a still image with a high resolution triggered by a detection of engine start or wheel rotation, or by driver's boarding. Here, the CPU 23 sets a resolution of a still image higher than that of a moving image. In an example according to the foregoing embodiments, it is preferable to photograph a still image during driving with the same level of a resolution as that of a still image photographed at an accident occurrence.

Then, the CPU 23 photographs the still image at a certain interval in a normal situation and holds the image in the buffer memory 16. The number of frames stored in the buffer memory 16 increases more than a predetermined number, the CPU 23 erases the still images in order from oldest one and holds the still images for a certain time period in the buffer memory 16. For example, 50 frames of still images photographed at an interval of 0.1 second are recorded in the buffer memory 16.

When an accident has been detected, the CPU 23 prohibits erasing of still image data in the buffer memory 16. Then, the CPU 23 transfers a set of still images stored in the buffer memory 16 representing situations before and after the accident occurrence to the built-in recording device 19 or the recording medium 26. Here, it is possible to grasp easily situations before and after the accident using still images with a high resolution photographed successively.

## Claims

1. An imaging apparatus mounted on a vehicle and imaging a vicinity of said vehicle, comprising:
a photographic lens;
an image pickup device generating an image signal by performing photoelectric conversion of an object image based on a light flux from said photographic lens;
an image processing section generating moving image data during vehicle driving based on said image signal;
an accident detection sensor detecting an accident occurrence based on a shock to said vehicle;
a controlling section making said image processing section generate accident image data representing an accident situation in a manner different from that in a normal situation based on an output of said accident detection sensor; and
a recording section recording said accident image data.

2. The imaging apparatus according to claim 1,
wherein said image processing section generates one or more frames of still image data, an information amount per frame of which is larger than that of moving image data in a normal situation, at a predetermined timing based on an output of said accident detection sensor; and
wherein said recording section records moving image data at an accident occurrence and said still image data as said accident image data.

3. The imaging apparatus according to claim 2,
wherein said still image data is different from a frame of moving image data in a normal situation in at least one of settings for a resolution, a gradation number and an aspect ratio.

4. The imaging apparatus according to claim 2 or 3,
wherein said image processing section generates multiple frames of said still image data during a photographing period for moving image data which constitutes said accident image data.

5. The imaging apparatus according to claim 4,
wherein said controlling section generates additional data representing a corresponding relationship between moving image data of said accident image data and frames of said still image data, and records the additional data in said recording section in association with said accident image data.

6. The imaging apparatus according to any one of claims 2 to 5, wherein said controlling section carries out a bracketing photography by changing a photographing condition for each frame of said still image data.

7. The imaging apparatus according to any one of claims 1 to 6, wherein said image processing section carries out at least one setting change out of increase of a resolution, increase of a gradation number and change of an aspect ratio in said moving image data, based on an output of said accident detection sensor, and generates moving image data constituting said accident image data.

8. The imaging apparatus according to any one of claims 1 to 7, further comprising a brakeage detection sensor detecting sudden braking of said vehicle,
wherein said controlling section instructs to start generation of said accident image data upon detecting sudden braking and makes said recording section hold said accident image data when detecting an accident occurrence within a predetermined time from said detection of sudden braking.

9. A drive recorder system comprising:
an imaging apparatus according to any one of claims 1 to 8;
a driving state detecting section detecting a driving state of said vehicle; and
a driving state recording section recording a driving state data representing said driving state.
